Europäisches Patentamt

European Patent Office

Office européen des brevets

(11) Publication number: **0 488 199 B1**

# EUROPEAN PATENT SPECIFICATION

(45) Date of publication of patent specification: **18.01.95**     (51) Int. Cl.6: **C01D 5/00**

(21) Application number: **91120250.5**

(22) Date of filing: **27.11.91**

(54) **Process for granulating potassium salts.**

(30) Priority: **27.11.90 IT 2220990**

(43) Date of publication of application:
**03.06.92 Bulletin 92/23**

(45) Publication of the grant of the patent:
**18.01.95 Bulletin 95/03**

(84) Designated Contracting States:
**BE DE ES FR GB GR NL**

(56) References cited:
**DE-A- 3 623 104**
**GB-A- 2 209 744**
**US-A- 4 385 920**

**IE JOURNAL CH vol. 68, February 1988,**
**pages 46 - 49; S.RAJAGOPALAN,**
**D.V.S.MURTHY: 'Granulation of NK fertilizers'**

(73) Proprietor: **ENICHEM AGRICOLTURA S.p.A.**
**Via Ruggero Settimo 55**
**I-90139 Palermo (IT)**

(72) Inventor: **Cocquio, Fabrizio, Dr.**
**5 int. 4, Via Alberoni**
**I-30030 Oriago di Mira,**
**Venice (IT)**
Inventor: **Nardon, Danilo**

**10, Via Chiarin**
**I-30030 Campalto,**
**Venice (IT)**
Inventor: **Fortibuoni, Raffaello**
**50, Via A. Moro**
**I-30035 Mirano,**
**Venice (IT)**
Inventor: **Silvestrin, Leonardo**
**14, Via Don Milani**
**I-30031 Dolo,**
**Venice (IT)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a process for granulating potassium salts, and in particular $K_2SO_4$ and/or KCl.

The commercially available potassium sulphate is usually prepared by compaction, on screws or rollers, of very fine powders kneaded with water and then subjected to drying, crushing and screening. However, the resulting product, although having a very high $K_2O$ content, exhibits poor physical characteristics. This kind of granulation (by compaction) may be classified as coalescence of the solid particles to granules, which granules are very little free-flowing due to the presence of sharp edges. Rounded off, more free-flowing and more abrasion-resistant granules could be obtained by means of a wet process in rotary drum granulators, but the potassium salts are only slightly water-soluble and so far it has not been possible to bring the concentration of the solutions to such a level as to render the process interesting from an industrial point of view. Processes of this type have recently been described in DE-A-3,623,104. Said processes are based on wet granulation (in a rotary drum) in the presence of a binder, for example starch paste.

Said methods, however, are not fully satisfactory as the $K_2SO_4$ to be conveyed to the drum could not yet be rendered sufficiently stable and homogeneous due to the fact that the additives used so far do not exert a sufficiently high binding activity. Thus the granules obtained have worse physical properties than the common granular complex fertilizers NPK (Nitrogen-Phosphorus-Potassium).

S. Rajagopalan and D.V.S. Murthy disclose in IE Journal CH, Vol. 68, February 1988, pages 46 - 49, a method for the granulation of NK fertilizers containing urea as the N-nutrient and potassium chloride as the K-nutrient. Bentonite is used as a binder. This document furthermore discloses granulated NK fertilizer compositions containing varying amounts of urea, potassium chloride and bentonite.

US-A-4 385 920 describes a process for the granulation of potassium salts to produce granules in high yield by the steps of mixing the potassium salt with an inorganic phosphate binder and water, granulating the mixture and drying it. Furthermore, this document discloses granulated compositions consisting of 85 to 98.5% of the potassium salt and 15 to 1.5% of the inorganic phosphate binder.

There has now been found a process, based on the selection of a particular binder and on the selection of particular operative conditions, which eliminates or alleviates the above drawbacks and permits to obtain

- homogeneous and highly concentrated, and therefore small volume-suspensions (slurries) of potassium salts, as a feed to the granulator;
- final granules having a very high $K_2O$ content and physical properties (for example particle size, crushing strength, dust content) comparable with the properties of the NPK granules available on the market.

In its broadest aspect the present invention relates to a process for granulating potassium salts, in particular potassium sulphate and/or chloride and/or carbonate and/or nitrate and/or phosphate, and/or langbeinite (and/or glaserite), which comprises:

(a) preparing, at 30 to 50°C, a gel of bentonite and/or any other activated clay, by mixing the bentonite and/or clay with water in a weight ratio water: bentonite (and/or clay) of from 5:1 to 15:1, and adding potassium salt to said gel, heated to 60 to 80°C, to obtain a slurry;

(b) feeding the slurry prepared in step (a) to a rotary drum granulator, where the slurry is sprayed onto a bed of preformed and recycled hot granules, adjusting the moisture content of the leaving granules to 4 to 8% by weight and adjusting the recycle ratio to 12:1 to 18:1,

(c) drying, by means of flue gases (at 250 to 270°C), the granules obtained in step (b) until the moisture content of the granules ranges from 2.0 to 3.5% by weight, the temperature of the granules, when leaving the drying zone, ranging from 60 to 85°C.

The subsequent operations may be conventional screening, grinding, dust removal and cooling operations.

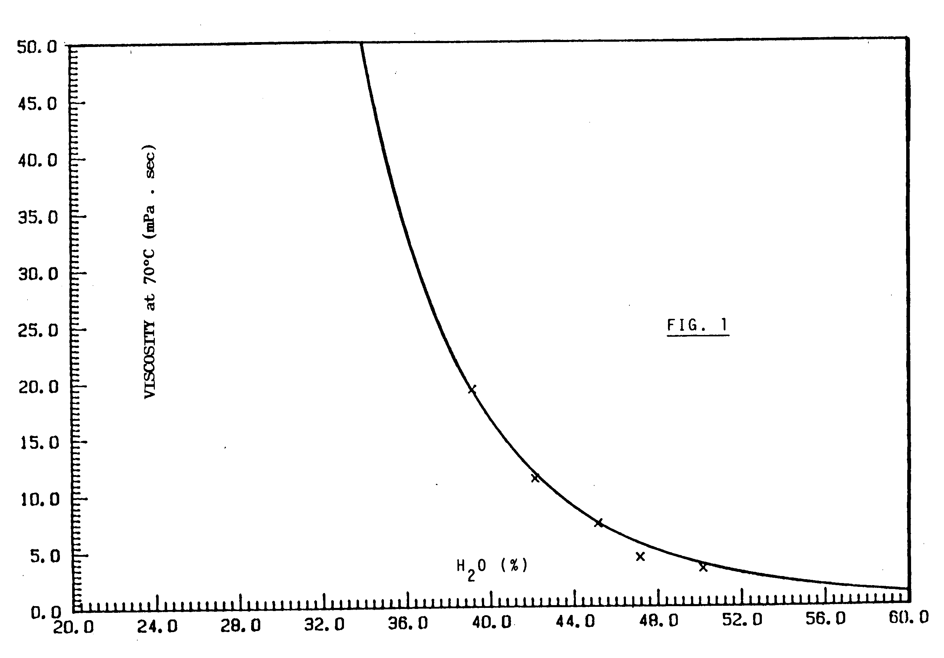

The above gel preferably has a viscosity of from 20 to 40 mPa.s and a flowability of from 6 to 10 $N/m^2$ (60 to 100 $dyne/cm^2$). The flow limit (flowability) is the minimum shearing stress at which the gel starts to flow and which can be measured by means of a speed-scanning rotary viscosimeter with coaxial cylinders. The feed slurry prepared according to step (a) can be easily pumped; its viscosity is comparable to that of conventional NPK slurries and permits to maintain the potassium salt crystals in suspension for several minutes. An example of the relationship between the viscosity of the $K_2SO_4$ (and bentonite) slurries according to the invention and the water content of the slurries is shown in figure 1, which relates to a test in which 4.3 kg of bentonite per 100 kg of dry $K_2SO_4$ (100%) in the final product were used.

The average moisture content of the granules, both in the granulator and in the drier, is critical; if the moisture level is too high, the granules exhibit a low mechanical strength and a high tendency to cause the fouling of the apparatus, while too low a moisture content (too dry granules) gives rise to considerable amounts of powder, which can lead to detrimental cloggings.

Other critical factors are the recycle ratio and the separation of the drying step from the granulation step. On the basis of tests conducted in a spouted bed it is assumed that the simultaneous occurrence of said two steps is an insurmountable obstacle for obtaining a satisfactory granulation. By means of the separate-step process, conversely, the granulation of potassium salts, particularly potassium sulphate, can be carried out with utmost ease, starting from conventional $K_2SO_4$ in powder form, without previously modifying the particle size distribution by means of grinding or screening.

The process of the present invention can be conducted in particularly advantageous manner if one or more of the following measures are adopted:

(I) Metering the bentonite (and/or clay) so that the amount of bentonite (and/or clay) ranges from 1 to 10 kg (preferably from 3 to 6 kg) per 100 kg of dry potassium salt contained in the final product.

(II) Metering the water so that the $H_2O$ content in the slurry fed to the granulator ranges from 30 to 55, and preferably from 35 to 46% by weight.

(III) Adjusting the granulometry of the powder used as a raw material in a manner such that not more than 25% by weight of the particles have an average size above 200 $\mu$m (0.2 mm) and not more than 5% by weight (preferably 0%) of the particles have an average size above 500 $\mu$m (0.5 mm)

(IV) Adjusting the cooling and/or the final moisture content of the granules; that portion of dried granules (having up to 2 to 3.5% by weight of moisture), which is not recycled in hot condition to the granulator (i.e., which is conveyed to storage or utilization) is subjected to

(i) cooling with air, preferably to 30°C or less, by adjusting the air flow rate and temperature so as to bring the moisture content of the granules to a level equal to or lower than 1.5% by weight, and preferably of from 1 to 1.5% by weight; and/or:

(ii) a (second) drying operation, in one or more steps, which lowers said moisture content to a level of from 0.1 to 1, and preferably from 0.1 to 0.5% by weight. It is, however, to be pointed out that the criticality of the process does not reside in said last-mentioned moisture contents, which are usual and concern the relatively small amount of granules sent to storage, but in the moisture contents (2 to 3.5%) relating to the large batches which form the recycle (by more than 10 times higher than the amount to be stored). The temperature of the recycled batches differs by a few degrees from the temperature of the batches coming from the primary drying operation.

The process according to the present invention permits to obtain very resistant and highly free-flowing spheroidal granules. In particular, said granules usually show the following characteristics:

(A) Their crushing strength is equal to or higher than 2 kg (measured as compression resistance of a granule having a diameter of 3.15 mm); reference is made to the standard method described on pages 9 and 10 of "Physical Properties of Fertilizers" (1979) published by T.V.A. (Tennessee Valley Authority).

(B) Their dust content is very low, i.e. equal to or lower than 500 ppm; see the method described on pages 25 and 26 of the above reference published by T.V.A.

(C) Their granulometry is excellent, since not more than 5% by weight (preferably not more than 2%) of the particles show an average diameter exceeding 5 mm, and at least 80% by weight (preferably at least 85%) of the granules have an average diameter ranging from 2 to 4 mm.

(D) Their caking behaviour is excellent (free flowing); reference is made to the method (caking test) described on pages 23 and 24 of the above text published by T.V.A.

The following examples are given to merely illustrate the present invention, without limiting, however, the scope thereof.

EXAMPLE 1

Part A: Preparation of the Slurry

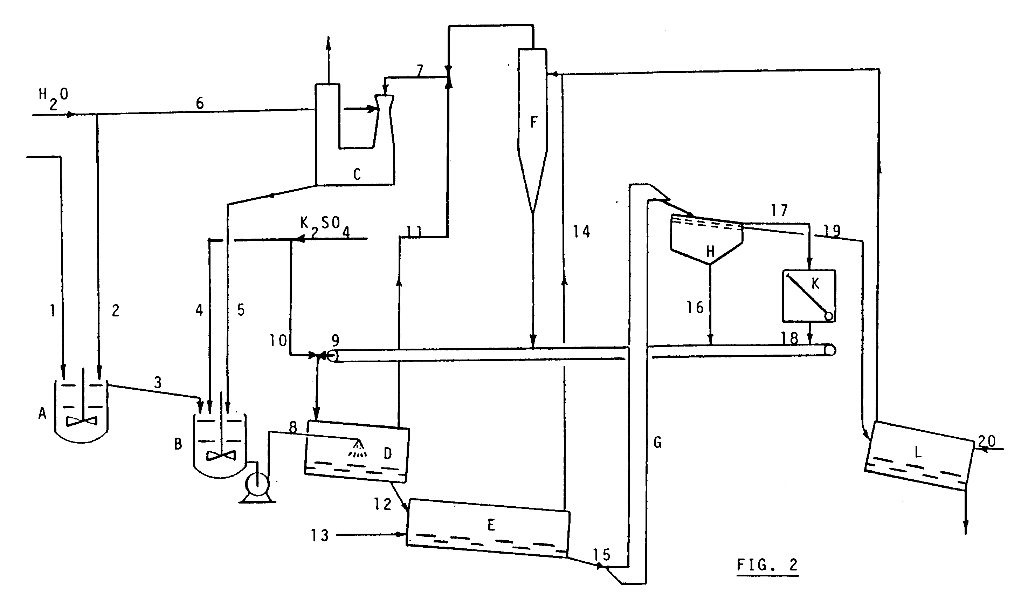

With reference to figure 2, a mixing tank (A) equipped with a rotary stirrer (200 r.p.m.) was fed with 0.6 kg/h of activated bentonite (1) and with 6 kg/h of deionized water (2); the mixture was maintained at 35°C for 100 minutes, whereafter it was possible to observe the formation of a gel having a water content of about 90% by weight, a viscosity of about 40 mPa.s and a flow limit of about 7 N/m$^2$ (70 dyne/cm$^2$). The gel so obtained (3) was transferred into a second mixing tank (B), similar to tank (A), fed with 10.5 kg/h of solid potassium sulphate (4), containing traces of $MgSO_4$, $CaSO_4$, $Na_2SO_4$ and KCl and having the following granulometry:

3

| Particle size | % by weight |
|---|---|
| above 1.0 mm | 0 |
| from 1.0 to 0.7 mm | 1 |
| from 0.7 to 0.5 mm | 3 |
| from 0.5 to 0.3 mm | 6 |
| from 0.3 to 0.2 mm | 12 |
| from 0.2 to 0.1 mm | 45 |
| below 0.1 mm | 33 |

Said activated bentonite, used in powder form (bulk density: 0.83 g/cm$^3$; particle size: below 0.1 mm) and sold by VALDOL under the designation BENTONITE C3, consisted of a montmorillonite in crypto-crystalline aggregates (tending to be amorphous) of spheroidal form, having the following chemical composition (in % by weight):

$SiO_2$: 34.7%; $Al_2O_3$: 9.6%; MgO: 5.7%; $Fe_2O_3$: 10.4%; CaO: 5.9%, $Na_2O$: 3.0%; $CO_2$: 10.1%; $H_2O$: 11.2%.

Into tank (B), heated at 75°C with (direct) steam, there also was introduced a recycle aqueous solution (5) coming from apparatus (C), where the powders which had formed in the various parts of the plant were removed with water (3.75 kg/h of solution at 15% by weight of $K_2SO_4$). The residence time in tank (B) was 80 minutes.

Part B: Granulation and Drying

A mass (8) equal to 20.9 kg/h of the slurry leaving tank (B), containing about 45% by weight of water (and 11 kg/h of $K_2SO_4$) was fed to granulator (D), consisting of a rotary drum sloping by 10°, and was sprayed onto a bed of 250 kg/h of hot fine particles (about 70°C) of potassium sulphate (9) recycled by the apparatus downstream of the granulator, and of a make up (10) equal fo 3 kg/h of $K_2SO_4$ in powder form. The powder (11) formed in the granulator was conveyed to apparatus (C) (scrubber); the granules (12) leaving granulator (D), having an average moisture content of 5.4% by weight, entered drier (E), consisting of a sloping (by 3°) rotary drum, internally bladed and fed with 200 Nm$^3$/h of flue gases (13) (generated by combustion) at 260°C; the powder (14) formed in drier (E) was fed to a centrifugal separator (cyclone) (F) before being finally sent to scrubber (C). The granules (15) leaving the drier had a temperature of 70°C, a moisture content of 2.1% by weight and exhibited the granulometry indicated in Table A below.

Part C: Screening and Cooling

The dried granules were lifted, by means of an elevator (G), up to screen (H). The fine fraction (16) was recycled to granulator (D); the coarse fraction (17) was converted into a recycled fine fraction (18) by means of grinding in mill (K) and a part of the fraction corresponding to the predetermined hourly production (19) was cooled to 30°C (within 20 minutes) in drum cooler (L), fed with fresh air (20). The characteristics of the finished granules leaving drum (L) are indicated in Table B below; to be stressed is, in particular, the moisture content (1.5% by weight).

EXAMPLE 2 (comparative)

Example 1 was repeated, but raising the temperature of the drying flue gases to 290°C. The granulometry data given in Table A indicate that this type of drying, carried out at a temperature exceeding the optimum values (250 - 270°C for the flue gases), causes such a lack of granulating liquid phase (moisture content = 0.9%) that the granule fineness increases to an unacceptable level.

## TABLE  A

| ITEM | EXAMPLE | 1 | 2(*) |
|------|---------|---|------|
| a) | HOURLY PRODUCTION (after cooling)  (kg/h) | 15 | 15 |
| | FEED TO TANK A: | | |
| b) | - Bentonite (kg/h) | 0.6 | 0.6 |
| c) | - $H_2O$        (kg/h) | 6 | 6 |
| | FEED TO TANK B: | | |
| d) | - $K_2SO_4$ in powder form (kg/h) | 10.5 | 10.5 |
| e) | - Aqueous solution of $K_2SO_4$ from the removals (kg/h) | 3.75 | 3.75 |
| f) | Moisture content of the slurry sent to granulator (% by weight) | about 45 | about 45 |
| g) | Recycle of hot and fine granules to granulator (kg/h) | 250 | 267 |
| h) | Make up   ($K_2SO_4$) (kg/h) | 3 | 3 |
| i) | Recycle ratio (g:a) | 16.7 | 17.8 |
| l) | Moisture of the granules at the granulator outlet (% by weight) | 5.4 | 4.1 |
| m) | Flow rate  of the flue gases fed to the drier (N $m^3$/h) | 200 (at 260°C) | 200 (at 290°C) |

(*) comparative test

TABLE A (continued)

| ITEM | EXAMPLE | 1 | 2(*) |
|------|---------|---|------|
| n) | Moisture of the granules at the drier outlet (% by wt. ) | 2.1 | 0.9 |
| o) | Temperature of the granule at the drier outlet | 70°C | about 85°C |

GRANULOMETRY AT THE DRIER

OUTLET

| | | |
|---|---|---|
| above 5 mm (% by weight) | 1.0 | - |
| from 5 to 4 mm (% by weight) | 3.7 | 0.1 |
| from 4 to 3 mm    " | 30.1 | 5.5 |
| from 3 to 2 mm    " | 49.9 | 34.5 |
| from 2 to 1 mm    " | 9.6 | 39.7 |
| from 1 to 0.5 mm    " | 4.6 | 12.8 |
| below 0.5 mm    " | 1.1 | 7.4 |

(*) comparative test

## TABLE B

| Appearance: granular (color: pale hazel-brown) | |
|---|---|
| Moisture (% by weight) | 1.5 |
| Bulk density (g/cm$^3$) | 1.25 |
| Heap angle (sexagesimal degrees) | 35° |
| GRANULOMETRY | |
| above 5 mm (% by weight) | 2 |
| from 5 to 4 mm " | 7 |
| from 4 to 3 mm " | 40 |
| from 3 to 2 mm " | 43 |
| from 2 to 1 mm " | 8 |
| below 1 mm | 0 |
| Caking behaviour | free flowing |
| Crushing strength (*) (kg) | 2.0 |
| Dust content (after 1 day) (ppm) | 500 |
| $K_2O$ 47.2 % by weight | Na 0.1% b.w. |
| MgO 1.1 % by weight | Cl 0.7% b.w. |
| (*) Compression strength after 24 hours of a granule having a diameter of 3.15 mm | |

## Claims

**1.** Process for granulating potassium salts, comprising:

(a) preparing, at 30 to 50°C, a gel of bentonite and/or any other activated clay, by mixing the bentonite and/or said clay with water in a weight ratio of water: bentonite and/or clay of from 5:1 to 15:1, and adding potassium salt to said gel, heated to 60 to 80°C, to obtain a slurry;

(b) feeding the slurry prepared in step (a) into a rotary drum granulator, where the slurry is sprayed onto a bed of preformed hot granules, adjusting the average moisture content of the granules leaving the granulator to from 4 to 8% by weight and adjusting the recycle ratio to from 12:1 to 18:1;

(c) drying, by means of flue gases at 250 to 270°C, the granules obtained in step (b) until the average moisture content of the granules ranges from 2.0 to 3.5% by weight, the temperature of the granules, at the outlet of the drying zone, ranging from 60 to 85°C.

2. Process according to claim 1, wherein said gel has a viscosity of from 20 to 40 mPa.s and a flow limit of from 6 to 10 $N/m^2$ (60 to 100 $dyne/cm^2$).

3. Process according to any one of claims 1 and 2, wherein the amount of bentonite and/or clay ranges from 1 to 10 kg, preferably from 3 to 6 kg, per 100 kg of dry potassium salt contained in the final product.

4. Process according to any one of claims 1 to 3, wherein the amount of water in the slurry obtained in step (a) ranges from 30 to 55, preferably from 35 to 46% by weight.

5. Process according to any one of claims 1 to 4, wherein the particle size distribution of the potassium salt added to said gel is such that not more that 25% by weight of the particles have an average size above 200 $\mu$m and not more than 5% by weight of the particles have an average size above 500 $\mu$m.

6. Process according to any one of claims 1 to 5, wherein that portion of dried granules which is not recycled to the granulator is subjected to
   (i) cooling with air, preferably to 30°C or below, adjusting the air flow rate and the temperature so as to bring the moisture content of the granules to at the most 1.5% by weight and preferably from 1 to 1.5% by weight; and/or
   (ii) a drying operation, in one or more steps, which reduces the moisture content to a level of from 0.1 to 1 and preferably 0.1 to 0.5% by weight.

7. Process according to any one of claims 1 to 6, wherein the weight ratio bentonite and/or clay : potassium salt in the slurry obtained according to step (a) ranges from 0.01:1 to 0.10:1.

8. Process according to any one of claims 1 to 7, wherein the potassium salt is selected from KCl, $K_2SO_4$, $KNO_3$, $K_2CO_3$, $K_3PO_4$, langbeinite, glaserite and mixtures thereof, particularly from KCl and/or $K_2SO_4$.

9. Spheroidal and free-flowing granules of potassium salts, obtainable by means of the process of any one of the preceding claims, having the following characteristics:
   (a) crushing strength equal to or higher than 2 kg;
   (b) dust content equal to or lower than 500 ppm;
   (c) amount of granules having an average diameter higher than 5 mm, i.e. coarse granules: not more than 5, and preferably not more than 2% by weight;
   (d) amount of granules having an average diameter of from 2 to 4 mm, i.e. standard granules: at least 80, and preferably at least 85% by weight.

**Patentansprüche**

1. Verfahren zum Granulieren von Kaliumsalzen, das umfaßt:
   (a) Herstellen, bei 30 bis 50°C, eines Gels von Bentonit und/oder einem anderen aktivierten Ton durch Mischen des Bentonits und/oder des Tons mit Wasser in einem Gewichtsverhältnis Wasser:Bentonit und/oder Ton von 5:1 bis 15:1 und Zugabe von Kaliumsalz zu dem auf 60 bis 80°C erhitzten Gel unter Erhalt einer Aufschlämmung;
   (b) Zuführen der in Schritt (a) hergestellten Aufschlämmung in einen Drehtrommel-Granulator, wo die Aufschlämmung auf ein Bett von vorgeformtem heißen Granulat gesprüht wird, Einstellen des durchschnittlichen Feuchtigkeitsgehalts des den Granulator verlassenden Granulats auf 4 bis 8 Gew.% und Einstellen des Rückführverhältnisses auf 12:1 bis 18:1;
   (c) Trocknen des in Schritt (b) erhaltenen Granulats mittels Abgasen bei 250 bis 270°C bis der durchschnittliche Feuchtigkeitsgehalt des Granulats bei 2,0 bis 3,5 Gew.-% liegt, wobei die Temperatur des Granulats am Auslaß der Trocknungszone im Bereich von 60 bis 85°C liegt.

2. Verfahren nach Anspruch 1, worin das Gel eine Viskosität von 20 bis 40 mPa.s und eine Fließgrenze von 6 bis 10 $N/m^2$ (60 bis 100 $Dyn/cm^2$) hat.

3. Verfahren nach irgendeinem der Ansprüche 1 und 2, worin die Menge Bentonit und/oder Ton bei 1 bis 10 kg, vorzugsweise 3 bis 6 kg, pro 100 kg trockenem, im Endprodukt enthaltenen Kaliumsalz liegt.

4. Verfahren nach irgendeinem der Ansprüche 1 bis 3, worin die Menge Wasser in der in Schritt (a) erhaltenen Aufschlämmung bei 30 bis 55, vorzugsweise 35 bis 46 Gew.-%, liegt.

5. Verfahren nach irgendeinem der Ansprüche 1 bis 4, worin die Teilchengrößenverteilung des dem Gel zugegebenen Kaliumsalzes derart ist, daß nicht mehr als 25 Gew.-% der Teilchen eine Durchschnittsgröße oberhalb von 200 $\mu$m haben und nicht mehr als 5 Gew.-% der Teilchen eine Durchschnittsgröße oberhalb von 500 $\mu$m haben.

6. Verfahren nach irgendeinem der Ansprüche 1 bis 5, worin der Anteil an getrocknetem Granulat, der nicht zum Granulator rückgeführt wird, unterworfen wird:
   (i) Abkühlen mit Luft, vorzugsweise auf 30°C oder darunter, Einstellen der Luftdurchströmgeschwindigkeit und der Temperatur, so daß der Feuchtigkeitsgehalt des Granulats auf höchstens 1,5 Gew.-% und vorzugsweise auf 1 bis 1,5 Gew.-% gebracht wird; und/oder
   (ii) einem Trocknungsvorgang in einem oder mehreren Schritten, der den Feuchtigkeitsgehalt auf eine Konzentration von 0,1 bis 1 und vorzugsweise von 0,1 bis 0,5 Gew.-% vermindert.

7. Verfahren nach irgendeinem der Ansprüche 1 bis 6, worin das Gewichtsverhältnis Bentonit und/oder Ton : Kaliumsalz in der nach Schritt (a) erhaltenen Aufschlämmung bei 0,01:1 bis 0,10:1 liegt.

8. Verfahren nach irgendeinem der Ansprüche 1 bis 7, worin das Kaliumsalz ausgewählt ist aus KCl, $K_2SO_4$, $KNO_3$, $K_2CO_3$, $K_3PO_4$, Langbeinit, Glaserit und Mischungen davon, insbesondere aus KCl und/oder $K_2SO_4$.

9. Kugelförmiges und rieselfähiges Granulat von Kaliumsalzen, erhältlich mittels des Verfahrens nach irgendeinem der vorhergehenden Ansprüche, mit folgenden Kennzeichen:
   (a) Bruchfestigkeit gleich oder höher als 2 kg;
   (b) Staubgehalt gleich oder weniger als 500 ppm;
   (c) Granulatmenge mit einem durchschnittlichen Durchmesser von größer als 5 mm, i.e. grobes Granulat: nicht mehr als 5 und vorzugsweise nicht mehr als 2 Gew.-%;
   (d) Granulatmenge mit einem durchschnittlichen Durchmesser von 2 bis 4 mm, i.e. Standardgranulat: wenigstens 80 und vorzugsweise wenigstens 85 Gew.-%.

## Revendications

1. Procédé de granulation de sels de potassium comprenant les étapes suivantes:
   (a) préparation à 30°C à 50°C d'un gel de bentonite et/ou d'une autre argile activée quelconque par mélange de la bentonite et/ou de l'argile avec de l'eau dans un rapport pondéral eau/bentonite (et/ou argile) de 5/1 à 15/1, et addition de sel de potassium audit gel, chauffé à 60 à 80°C pour obtenir une suspension;
   (b) introduction de la suspension préparée dans l'étape (a) dans un granulateur à tambour rotatif, la suspension étant pulvérisée sur un lit de granulés chauds préformés, ajustement de la teneur moyenne en humidité des granulés quittant le granulateur à une valeur de 4 à 8% en poids et ajustement du taux de recyclage à des valeurs de 12/1 à 18/1;
   (c) séchage au moyen de gaz chauds (à 250 à 270°C) des granulés obtenus dans l'étape (b) jusqu'à ce que la teneur moyenne en humidité des granulés soit comprise entre 2,0 et 3,5% en poids, la température des granulés, lorsqu'ils quittent la zone de séchage, étant comprise entre 60 et 85°C.

2. Procédé selon la revendication 1, dans lequel ledit gel a une viscosité de 20 à 40 mPa.s et une limite d'écoulement de 6 à 10 N/m² (60 à 100 dyne/cm²).

3. Procédé selon l'une quelconque des revendications 1 et 2, dans lequel la quantité de bentonite et/ou d'argile est comprise entre 1 et 10 kg, de préférence de 3 à 6 kg pour 100 kg de sel de potassium sec contenu dans le produit final.

4. Procédé selon l'une quelconque des revendications 1 à 3, dans lequel la quantité d'eau dans la suspension obtenue dans l'étape (a) est comprise entre 30 et 55%, de préférence entre 35 et 46% en poids.

5. Procédé selon l'une quelconque des revendications 1 à 4, dans lequel la distribution de dimension des particules du sel de potassium ajouté audit gel est telle que pas plus de 25% en poids des particules ont une dimension moyenne supérieure à 200 $\mu$m et pas plus de 5% en poids des particules ont une dimension moyenne supérieure à 500 $\mu$m.

6. Procédé selon l'une quelconque des revendications 1 à 5, dans lequel cette partie des granulés séchés qui n'est pas recyclée dans le granulateur est soumise à:
(i) refroidissement à l'air, de préférence à 30°C ou moins, réglage du débit d'air et de la température de façon à porter la teneur en humidité des granules à une valeur au maximum égale à 1,5% en poids et de préférence comprise entre 1 et 1,5% en poids; et/ou
(ii) une opération de séchage en une ou plusieurs étapes qui réduit la teneur en humidité à un niveau de 0,1 à 1%, et de préférence de 0,1 à 0,5% en poids.

7. Procédé selon l'une quelconque des revendications 1 à 6, dans lequel le rapport pondéral bentonite et/ou argile/sel de potassium dans la suspension obtenue selon l'étape (a) est compris entre 0,01/1 et 0,10/1.

8. Procédé selon l'une quelconque des revendications 1 à 7, dans lequel le sel de potassium est choisi parmi KCl, $K_2SO_4$, $KNO_3$, $K_2CO_3$, $K_3PO_4$, langbéinite, glasérite et leurs mélanges, en particulier parmi KCl et/ou $K_2SO_4$.

9. Granulés sphéroïdaux et s'écoulant librement de sels de potassium pouvant être obtenus au moyen du procédé selon l'une quelconque des revendications précédentes et présentant les caractéristiques suivantes:
(a) résistance au broyage égale ou supérieure à 2 kg;
(b) teneur en poussière égale ou inférieure à 500 ppm;
(c) quantité de granulés dont le diamètre moyen est supérieur à 5 mm (c'est-à-dire granulés grossiers): ne dépassant pas 5% et de préférence ne dépassant pas 2% en poids;
(d) quantité de granulés dont le diamètre moyen est compris entre 2 à 4 mm, c'est-à-dire granulés standards: au moins 80 et de préférence au moins 85% en poids.

FIG. 1

FIG. 2